# EUROPÄISCHE PATENTSCHRIFT

(11) **EP 4 419 880 B1**
(45) Veröffentlichungstag und Bekanntmachung des Hinweises auf die Patenterteilung: **09.12.2026**
(21) Anmeldenummer: 22809340.7
(22) Anmeldetag: 18.10.2022
(51) Int. Cl.: G01M 5/00, E01B 27/17, B61L 23/04, E01B 35/00

(54) **VERFAHREN UND VORRICHTUNG ZUM BESTIMMEN DER LÄNGSKRÄFTE IN GLEISSCHIENEN**
METHOD AND DEVICE FOR DETERMINING THE LONGITUDINAL FORCES IN TRACK RAILS
PROCÉDÉ ET DISPOSITIF POUR DÉTERMINER LES FORCES LONGITUDINALES DANS DES RAILS DE CHEMIN DE FER

(30) Priorität: 21.10.2021 AT 508372021
(43) Veröffentlichungstag der Anmeldung: 28.08.2024
(73) Patentinhaber: Plasser & Theurer, Export von Bahnbaumaschinen, Gesellschaft m.b.H., 1010 Wien (AT)
(72) Erfinder: SCHÖLLHAMMER, Daniel, 4040 Linz (AT); DAXBERGER, Harald, 4040 Linz (AT); QUITTNER, Markus, 4020 Linz (AT); KOCZWARA, Christian, 3264 Gresten (AT); AUER, Florian, 1010 Wien (AT)
(86) Internationale Anmeldenummer: PCT/EP2022/078944
(87) Internationale Veröffentlichungsnummer: WO 2023/066918

(56) Entgegenhaltungen:
- WO-A1-2008/129105
- DE-C2- 2 418 318
- US-A1- 2015 368 865
- SATO Y: "Study on measurement of rail longitudinal force on slab track by rail lifting", 1 January 2002 (2002-01-01), Ashurst Lodge, Southampton, SO40 7AA, UK, XP093020029, ISBN: 978-1-85312-913-1, Retrieved from the Internet <URL:https://www.witpress.com/Secure/elibrary/papers/CR02/CR02056FU.pdf> [retrieved on 20230201], DOI: 10.2495/CR020561

## Beschreibung

Die Erfindung betrifft ein Verfahren zum Bestimmen der Längskräfte in Gleisschienen. Ferner betrifft die Erfindung eine Vorrichtung zum Ausführen eines derartigen Verfahrens.

Durch offenkundige Vorbenutzung bekannt ist ein Verfahren zum Bestimmen der Längskräfte in Gleisschienen, bei welchem vollständig von Gleisschwellen gelöste Gleisschienen vertikal angehoben werden. Die hierzu erforderliche Prüfkraft wird erfasst. Anhand der Prüfkraft werden die in den Gleisschienen vorliegenden Längskräfte bestimmt. Nachteilig ist, dass das Lösen der Gleisschienen von den Gleisschwellen zeit- und kostenintensiv ist. Für den Schienenverkehr steht das Gleis in diesem Zeitraum nicht zur Verfügung. Um Verwerfungen der Gleisschienen beim Lösen von den Gleisschwellen zu vermeiden, ist das Verfahren zudem nur dann durchführbar, wenn die Temperatur der Gleisschienen unterhalb der Neutraltemperatur liegt. Ein derartiges Verfahren ist bekannt aus der WO 2008/129105 A1.

Gleisbaumaschinen sind bekannt aus der US 2015/0368865 A1 und der DE 24 18 318 C2.

Es ist eine Aufgabe der Erfindung, ein verbessertes Verfahren zum Bestimmen der Längskräfte in Gleisschienen zu schaffen, welches insbesondere besonders flexibel, zeiteffizient und wirtschaftlich ausführbar ist.

Diese Aufgabe wird durch ein Verfahren mit den Merkmalen des Anspruchs 1 gelöst. Es wurde erkannt, dass das Bestimmen der Längskräfte in mindestens einer Gleisschiene anhand mindestens eines mit einer Prüfkraft korrelierenden Kraft-Messwerts besonders flexibel, zeiteffizient und wirtschaftlich ausführbar ist, wenn beim Erfassen des mindestens einen Kraft-Messwerts mindestens eine der Gleisschwellen an demjenigen Schienenabschnitt befestigt ist, welcher durch Bereitstellen der Prüfkraft zwischen einer Ausgangsanordnung und einer Prüfanordnung verlagert wird. Dadurch, dass die mindestens eine Gleisschwelle an der Gleisschiene befestigt bleibt, kann das Lösen bzw. das Herstellen der Verbindung entfallen. Sperrzeiten von Gleisstrecken können reduziert oder vollständig vermieden werden. Verwerfungen der Gleisschienen, insbesondere bei Schienentemperaturen oberhalb der Neutraltemperatur, beispielsweise aufgrund unerwartet hoch oder rasch ansteigender Umgebungstemperaturen, können aufgrund der fortbestehenden Stützung der Gleisschienen durch die Gleisschwellen zuverlässig verhindert werden.

Unter den Längskräften in Gleisschienen werden nachfolgend in den Gleisschienen herrschende Beanspruchungen und auf die Gleisschienen wirkende Belastungen verstanden, welche entlang der Längsrichtung der Gleisschienen wirken. Derartige Belastungen sind beispielsweise äußere Kräfte und/oder Temperaturen, insbesondere Temperaturänderungen. Entsprechende Beanspruchungen umfassen Spannungen und Dehnungen.

Unter der Prüfkraft wird diejenige Kraft verstanden, welche das Verlagern des Schienenabschnitts der mindestens einen Gleisschiene in die Prüfanordnung und/oder das Halten des Schienenabschnitts in der Prüfanordnung bewirkt. Die Prüfkraft kann mindestens eine Punktlast und/oder mindestens eine Streckenlast umfassen. Vorzugsweise wird die Prüfkraft in Form einer einzelnen Punktlast auf den Schienenabschnitt ausgeübt. Die mindestens eine Punktlast kann beispielsweise mittels eines Aktors, insbesondere eines hydraulischen Aktors, bewirkt und/oder mittels eines Greifers auf den jeweiligen Schienenabschnitt übertragen werden.

Unter dem Schienenabschnitt wird derjenige Abschnitt der mindestens einen Gleisschiene verstanden, welcher in der Prüfanordnung gegenüber der Ausgangsordnung verlagert ist. Der Schienenabschnitt überlappt entlang der Längsrichtung des Gleises zumindest den Ort, an dem die Prüfkraft an der mindestens einen Gleisschiene bereitgestellt wird. Der Schienenabschnitt ist entlang der Längsrichtung begrenzt durch diejenigen Abschnitte der mindestens einen Gleisschiene, welche in der Prüfanordnung keine Verlagerung gegenüber der Ausgangsanordnung erfahren.

Das Gleis umfasst vorzugsweise die Gleisschwellen und zwei parallel und entsprechend einer Spurweite beabstandet zueinander angeordnete Gleisschienen. Gemäß einem Aspekt der Erfindung werden durch Bereitstellen der Prüfkraft zwei parallele, einander in Längsrichtung des Gleises vollständig überlappende, Schienenabschnitte der beiden Gleisschienen durch Bereitstellen der Prüfkraft verlagert. Insbesondere kann ein der Längserstreckung dieser Schienenabschnitte entsprechender Gleisabschnitt durch Bereitstellen der Prüfkraft aus der Ausgangsanordnung in die Prüfanordnung verlagert werden.

Das Verlagern des Schienenabschnitts der mindestens einen Gleisschiene erfolgt vorzugsweise senkrecht zur Längsrichtung des Gleises, insbesondere in Horizontalrichtung und/oder in Vertikalrichtung, insbesondere ausschließlich in eine dieser Richtungen. Der Kraft-Messwert kann hierzu eine Horizontalkomponente und/oder eine Vertikalkomponente aufweisen. Das Erfassen des mindestens einen Kraft-Messwerts kann mittels mindestens eines Kraft-Messmittels, insbesondere mindestens einer Kraftmessdose, erfolgen.

Erfindungsgemäß wird die mindestens eine an dem Schienenabschnitt befestigte Gleisschwelle durch Bereitstellen der Prüfkraft zusammen mit dem Schienenabschnitt aus der Ausgangsanordnung in die Prüfanordnung verlagert. In dem Schienenabschnitt der mindestens einen Gleisschiene sind vorzugsweise mindestens zwei, insbesondere mindestens drei, insbesondere mindestens fünf der Gleisschwellen befestigt.

Gemäß einem weiteren Aspekt der Erfindung wird der Schienenabschnitt, insbesondere die paarweisen Schienenabschnitte, und/oder das Gleis, aus der Ausgangsanordnung in mindestens zwei, insbesondere mindestens drei, insbesondere mindestens fünf, und/oder maximal zehn, der Prüfanordnungen verlagert. In diesen Prüfanordnungen kann jeweils ein mit der jeweiligen Prüfkraft korrelierender Kraft-Messwert ermittelt werden. Hieraus können die Längskräfte in der mindestens einen Gleisschiene bestimmt werden. Insbesondere kann ein Verlauf des mindestens einen Kraft-Messwerts beim Verlagern in die mindestens eine Prüfanordnung bestimmt werden. Anhand des Verlaufs des mindestens einen Kraft-Messwerts können die Längskräfte in der mindestens einen Gleisschiene mehrfach bestimmt werden. Ein Mittelwert der mehrfach bestimmten Längskräfte kann gebildet werden. Hierdurch können die Längskräfte besonders zuverlässig und präzise bestimmt werden.

Gemäß einem weiteren Aspekt der Erfindung kann das Bestimmen der Längskräfte ferner anhand des Gewichts der mindestens einen Gleisschiene und/oder der mindestens einen an dem Schienenabschnitt befestigten Gleisschwelle erfolgen. Das Gewicht der Gleisschiene kann beispielsweise als Streckenlast angenommen werden. Das Gewicht der mindestens einen Gleisschwelle kann ebenfalls überschlägig als Streckenlast und/oder in Form einzelner Punktlasten in die Bestimmung der Längskräfte einfließen. Hierdurch können die Längskräfte besonders präzise bestimmt werden.

Gemäß einem Aspekt der Erfindung erfolgt das Verlagern aus der Ausgangsanordnung in die Prüfanordnung und/oder das Erfassen des mindestens einen Kraft-Messwerts bei einer Schienentemperatur, welche oberhalb und/oder unterhalb der Neutraltemperatur liegt. Unter der Neutraltemperatur wird diejenige Schienentemperatur verstanden, bei welcher die Längskräfte, insbesondere die Längsdehnungen, in der jeweiligen Gleisschiene gleich null sind. Vorteilhaft wird hierdurch erreicht, dass das Verfahren auch bei erhöhten Umgebungstemperaturen und/oder ohne Kenntnis der Neutraltemperatur ausführbar ist. Dies wird insbesondere dadurch ermöglicht, dass die Gleisschienen nicht von den Gleisschwellen gelöst werden müssen, wodurch diese in ihrer Lage fixiert bleiben und, wodurch Verwerfungen quer zur Längsrichtung vermieden werden. Das Verfahren ist somit sehr robust gegenüber hohen Schienentemperaturen, beispielsweise aufgrund ungenauer Wetterprognosen oder Montageverzögerungen.

Gemäß einem weiteren Aspekt der Erfindung wird ein mit der Temperatur der mindestens einen Gleisschiene korrelierender Temperatur-Messwert erfasst. Vorzugsweise erfolgt das Erfassen des Temperatur-Messwerts berührend und/oder berührungslos, insbesondere mittels eines Pyrometers. Das Erfassen des Temperatur-Messwerts kann eine Mittelwertbildung über mehrere Einzelmessungen umfassen. Vorzugsweise wird der Temperatur-Messwert im Bereich des Schienenabschnitts und/oder zum Zeitpunkt des Erfassens des mindestens einen Kraft-Messwerts erfasst. Vorzugsweise erfolgt eine örtliche und zeitliche Zuordnung, insbesondere eine kombinierte Dokumentation, der Längskräfte und dem zugehörigen Temperatur-Messwert.

Ein Verfahren nach Anspruch 2 ist besonders zeiteffizient und wirtschaftlich ausführbar. Vorzugsweise ist das Gleis vollständig montiert. Das Verfahren kann nach dem Herstellen des Gleises, insbesondere vor der erstmaligen Freigabe für den Fahrbetrieb, und/oder nach der bereits erfolgten Benutzung im Fahrbetrieb, insbesondere im Zuge einer Instandhaltungsmaßnahme, durchgeführt werden. Die Befestigung der Gleisschienen an sämtlichen Gleisschwellen bleibt vorzugsweise, insbesondere gegenüber dem für den Fahrbetrieb vorgesehenen Zustand, vollständig erhalten. Hierdurch können Sperrzeiten der Gleisstrecke reduziert, insbesondere vermieden werden. Der erforderliche Montageaufwand ist zudem reduziert.

Ein Verfahren nach Anspruch 3 ist besonders flexibel einsetzbar. Die Neutraltemperatur wird vorzugsweise anhand des mindestens einen Temperatur-Messwerts und der ermittelten Längskräfte, insbesondere der Längsdehnung, ermittelt. Entsprechend bekannter Zusammenhänge kann über den Wärmedehnungskoeffizienten einer Gleisschiene in Längsrichtung auf die zum Erzielen einer bestimmten Längsdehnung erforderlichen Temperaturdifferenz geschlossen werden. Über die Neutraltemperatur ist die Beanspruchung der Gleisschienen besonders anschaulich darstellbar und vergleichbar. Insbesondere kann ein Neutraltemperatur-Grenzwert vorgegeben werden. Beim Unterschreiten und/oder Überschreiten des Neutraltemperatur-Grenzwerts wird vorzugsweise bestimmt, dass Instandhaltungsmaßnahmen notwendig sind. Der normale Fahrbetrieb kann in Folge dessen eingeschränkt oder gesperrt werden.

Ein Verfahren nach Anspruch 4 gewährleistet das Bestimmen der Längskräfte in besonders zuverlässiger und präziser Weise. Der mindestens eine Weg-Messwert kann an einer beliebigen Position entlang des Schienenabschnitts, vorzugsweise aber im Bereich, insbesondere am Ort, der auf den Schienenabschnitt wirkenden Prüfkraft, bestimmt werden. Der mindestens eine Weg-Messwert kann mit der Vertikalauslenkung und/oder einer Horizontalauslenkung des Schienenabschnitts zwischen der Ausgangsanordnung und der Prüfanordnung korrelieren. Alternativ zum Erfassen des Weg-Messwerts kann der Schienenabschnitt in eine vorbestimmte Prüfposition verlagert werden, beispielsweise mittels einer Verlagerungsmechanik mit festem Endanschlag, insbesondere mittels eines Kniehebels.

Ein Verfahren nach Anspruch 5 ist besonders zeiteffizient und wirtschaftlich in der Ausführung. Unter dem Hebe- und Richtaggregat wird eine Einrichtung zum Verlagern eines Gleises aus einer Ist-Gleisanordnung in eine Soll-Gleisanordnung verstanden. Das Hebe- und Richtaggregat ist vorzugsweise zum Verlagern des Gleises quer zu der Längsrichtung, insbesondere in Vertikalrichtung und/oder Horizontalrichtung, ausgebildet. Hebe- und Richtaggregate stehen für den Gleisbau vielfach bereits zur Verfügung. Auf die Anschaffung zusätzlicher Einrichtungen zum Verlagern des Schienenabschnitts kann somit verzichtet werden. Insbesondere kann das Verfahren zeitlich parallelisiert mit einem Verfahren zum Heben und/oder zum Verlagern des Gleises in die Soll-Gleisanordnung ausgeführt werden.

Ein Verfahren nach Anspruch 6 ist besonders zeiteffizient und wirtschaftlich in der Ausführung. Das Verdichten der dem Schienenabschnitt zugrundeliegenden Gleisbettung erfolgt vorzugsweise bei einer zumindest anteilig durch das Verlagern von der Ausgangsanordnung in die Prüfanordnung erreichten Bearbeitungsanordnung des Schienenabschnitts. Das für ein Verdichtungsverfahren förderliche Anheben des Gleises kann somit zeitlich parallelisiert zum Bestimmen der Längskräfte genutzt werden. Das Erfassen des mindestens einen Kraft-Messwerts erfolgt vorzugsweise zeitlich getrennt von dem Verdichtungsvorgang, insbesondere dem Eindringen der Stopfpickel in die Schotterbettung. Hierdurch können Messfehler, insbesondere aufgrund störender Einflüsse auf das Erfassen des Kraft-Messwerts, vermieden werden.

Ein Verfahren nach Anspruch 7 gewährleistet das Bestimmen der Längskräfte in besonders zuverlässiger und präziser Weise. Durch Berücksichtigung des Einflusses der Bettungssteifigkeit auf das Bestimmen der Längskräfte wird gewährleistet, dass die Längskräfte, insbesondere bei unterschiedlicher Beschaffenheit der Gleisbettung, zuverlässig und präzise bestimmt werden können. Die Bettungssteifigkeit kann beispielsweise in ein Bettungsmodell einfließen, welches auf dem Bettungsmodulverfahren nach Winkler basiert.

Ein Verfahren nach Anspruch 8 ist besonders flexibel anwendbar und gewährleistet das Bestimmen der Längskräfte in besonders präziser Weise. Vorzugsweise wird ein mit der Bettungssteifigkeit der dem Schienenabschnitt zugrundeliegenden Gleisbettung korrelierender Bettungs-Messwert erfasst. Der Bettungs-Messwert kann zur Bestimmung der Längskräfte herangezogen werden. Hierdurch kann der Einfluss unterschiedlicher Bettungssteifigkeiten auf die Bestimmung der Längskräfte berücksichtigt werden. Der Bettungs-Messwert kann beispielsweise in Form eines Verdichtungs-Messwerts, insbesondere anhand eines mittels des Stopfaggregats erfassten Messwerts, und/oder anhand mindestens eines mit der Prüfkraft korrelierenden Kraft-Messwerts ermittelt werden. Der Verdichtungs-Messwert korreliert insbesondere mit Reaktionskräften zwischen der Gleisbettung und den Stopfpickeln des Stopfaggregats beim Verdichten der Gleisbettung.

Ein Verfahren nach Anspruch 9 gewährleistet das Bestimmen der Längskräfte in besonders flexibler und zeiteffizienter Weise. Die zum Ausführen des Verfahrens erforderliche Rechenkapazität ist vergleichsweise gering. Insbesondere kann das Bestimmen der Längskräfte anhand des mindestens einen Kraft-Messwerts mittels einer Auswerteeinrichtung mit einem herkömmlichen Microcontroller und/oder einem herkömmlichen Desktop-PC ausgeführt werden. Geeignete analytische Methoden umfassen beispielsweise ein Strukturmodell, bei welchem die mindestens eine Gleisschiene, insbesondere zusammen mit den Gleisschwellen, als Balken, insbesondere als elastisch gebetteter Balken modelliert ist. Eine entsprechende analytische Methode kann beispielsweise auf der linearen Balkentheorie nach Bernoulli oder einer nicht-linearen Balkentheorie basieren.

Gemäß einem, insbesondere eigenständigen, Aspekt der Erfindung erfolgt das Bestimmen der Längskräfte in Gleisschienen unter Berücksichtigung der Bettungssteifigkeit der einem entsprechenden Schienenabschnitt zugrundeliegenden Gleisbettung. Insbesondere können die Längskräfte anhand von Eigenschaften der, insbesondere mit der mindestens einen Gleisschiene verbundenen, Gleisschwelle, insbesondere dem Gewicht der Gleisschwelle, bestimmt werden.

Ein Verfahren nach Anspruch 10 gewährleistet das Bestimmen der Längskräfte in besonders flexibler und robuster Weise. Das Bestimmen der Längskräfte in Gleisschienen anhand des mindestens einen Kraft-Messwerts, welcher mit einer Prüfkraft zum Verlagern eines Schienenabschnitts aus einer Ausgangsanordnung in eine Prüfanordnung korreliert, auf Basis der Finite Elemente Methode (FEM) stellt insbesondere einen eigenständigen Aspekt der Erfindung dar. Die FEM kann mittelbar zum Bestimmen der Längskräfte genutzt werden. Alternativ kann die FEM zur Bestimmung von Parametern analytischer Methoden zum Bestimmen der Längskräfte genutzt werden. Ein entsprechendes Verfahren wird auch als semi-analytisches Verfahren bezeichnet. Vorzugsweise basiert die FEM auf einer Modellierung der mindestens einen Gleisschiene mittels Lagrange-Polynomen, noch bevorzugter auf einer Modellierung mittels Non-Uniform Rational B-Splines (NURBS). Eine besonders präzise Bestimmung der Längskräfte in Gleisschienen wird ermöglicht durch eine isogeometrische Analyse eines Strukturmodells des Gleises und/oder der Gleisbettung.

Ein Verfahren nach Anspruch 11 gewährleistet das Bestimmen der Längskräfte in besonders robuster und präziser Weise. Das Bestimmen der Längskräfte erfolgt vorzugsweise anhand von mindestens zwei, insbesondere mindestens drei, insbesondere mindestens fünf, insbesondere mindestens zehn der Kraft-Messwerte. Die Kraft-Messwerte werden vorzugsweise an derselben Position und/oder an unterschiedlichen Positionen entlang der Längsrichtung des Gleises erfasst. Ein Mittelwert über mehrere der Kraft-Messwerte kann gebildet werden. Ferner kann die Anzahl erforderlicher vorbekannter Parameter zum Berechnen der Längskräfte reduziert werden. Das Verfahren ist besonders flexibel einsetzbar und führt zu besonders präzisen Ergebnissen.

Eine weitere Aufgabe der Erfindung besteht darin, eine verbesserte Vorrichtung zum Bestimmen der Längskräfte in Gleisschienen, insbesondere zum Ausführen des vorstehend beschriebenen Verfahrens, zu schaffen, welche besonders flexibel, zeiteffizient und wirtschaftlich einsetzbar ist.

Diese Aufgabe wird durch eine Vorrichtung mit den Merkmalen des Anspruchs 12 gelöst. Die Vorteile der Vorrichtung entsprechen den Vorteilen des vorstehend beschriebenen Verfahrens. Vorzugsweise ist die Vorrichtung mit mindestens einem der Merkmale weitergebildet, die vorstehend in Zusammenhang mit dem Verfahren beschrieben sind. Die Prüfeinrichtung weist vorzugsweise mindestens einen Prüfaktor, insbesondere einen Hebeaktor und/oder einen Richtaktor, zum Verlagern des jeweiligen Schienenabschnitts der mindestens einen Gleisschiene, insbesondere zweier Gleisschienen, insbesondere eines Gleisabschnitts, aus der Ausgangsanordnung in die Prüfanordnung durch Bereitstellen der Prüfkraft auf. Der mindestens eine Prüfaktor kann zum Verlagern des Schienenabschnitts in vertikaler Richtung und/oder in horizontaler Richtung ausgebildet sein.

Die Prüfeinrichtung kann zum Erfassen des mindestens einen Kraft-Messwerts vorzugsweise mindestens ein Kraft-Messmittel aufweisen. Die Prüfeinrichtung kann mindestens ein Weg-Messmittel zum Erfassen des mindestens einen Weg-Messwerts aufweisen.

Gemäß einem Aspekt der Erfindung ist die Vorrichtung als Gleisbaumaschine, insbesondere zur Herstellung und/oder Instandhaltung eines Gleises, ausgebildet.

Eine Vorrichtung nach Anspruch 13 ist besonders flexibel und zeiteffizient einsetzbar. Der Fahrwagen kann als Zwei-Wege-Fahrzeug ausgebildet sein. Der Fahrwagen kann einen Fahrmotor aufweisen oder als Anhänger ohne Fahrantrieb ausgebildet sein. Die Prüfeinrichtung ist vorzugsweise unlösbar oder lösbar an dem Fahrwagen angebracht. Die Prüfeinrichtung kann eine Kopplung zum lösbaren Verbinden mit dem Fahrwagen aufweisen.

Eine Vorrichtung nach Anspruch 14 ist besonders flexibel und wirtschaftlich einsetzbar. Mittels der Prüfeinrichtung sind vorzugsweise die Längskräfte in demjenigen Schienenabschnitt bestimmbar, auf dem der Fahrwagen angeordnet ist, insbesondere den der Fahrwagen entlang der Längsrichtung des Gleises überlappt. Mittels der Vorrichtung können zusätzlich oder alternativ die Längskräfte in einem Schienenabschnitt eines benachbarten Gleises bestimmt werden. Hierzu kann die Vorrichtung eine mit dem Fahrwagen verbundene Positioniereinrichtung zum Verlagern der Prüfeinrichtung senkrecht zu dem Gleis aufweisen.

Eine Vorrichtung nach Anspruch 15 ist besonders flexibel und wirtschaftlich im Betrieb. Vorzugsweise wird der mindestens eine Prüfaktor zum Verlagern des Schienenabschnitts aus der Ausgangsanordnung in die Prüfanordnung sowohl zum Bestimmen der Längskräfte, insbesondere zum Bewirken der Prüfkraft, als auch zum Verdichten der dem Schienenabschnitt zugrundeliegenden Gleisbettung verwendet. Ein separater Hebeaktor kann eingespart werden. Das Verdichten der Gleisbettung und das Bestimmen der Längskräfte in den Gleisschienen ist zeitlich zumindest teilweise parallelisierbar.

Weitere Merkmale, Einzelheiten und Vorteile der Erfindung ergeben sich aus der nachfolgenden Beschreibung eines Ausführungsbeispiels anhand der Figuren. Es zeigen:
- Fig. 1: Eine Seitenansicht einer Vorrichtung, insbesondere einer Gleisbaumaschine, zum Bestimmen der Längskräfte in Schienen, aufweisend eine Prüfeinrichtung zum Verlagern eines Schienenabschnitts, wobei der Schienenabschnitt in einer Ausgangsanordnung angeordnet ist,
- Fig. 2: eine Seitenansicht der Vorrichtung in Fig. 1, wobei mittels der Prüfeinrichtung eine Prüfkraft auf den Schienenabschnitt ausgeübt wird und wobei der Schienenabschnitt in einer Prüfanordnung angeordnet ist,
- Fig. 3: ein Strukturmodell des Schienenabschnitts in Fig. 2 zum Bestimmen der Längskräfte anhand des mindestens einen Kraft-Messwerts, und
- Fig. 4: ein Freischnitt eines Abschnitts des Strukturmodells in Fig. 3 mit den an den Schnittgrenzen wirkenden Schnittkräften.

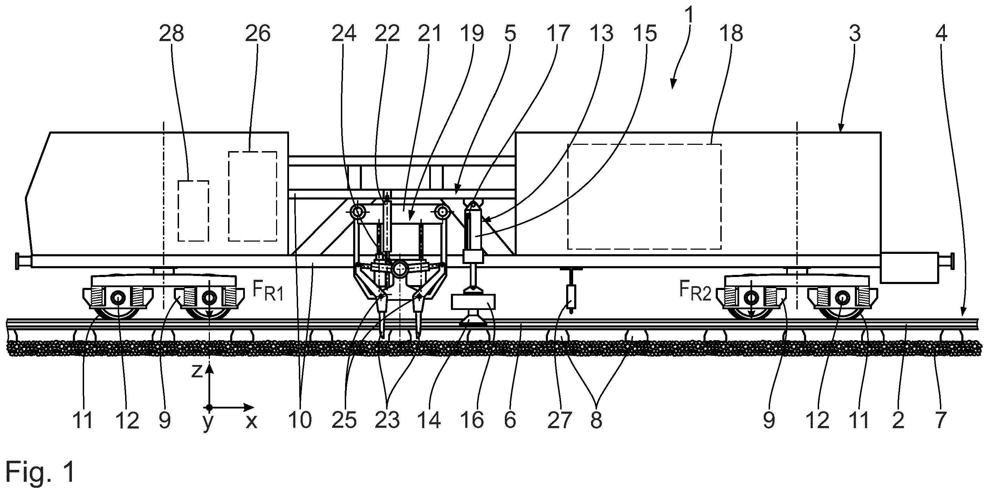

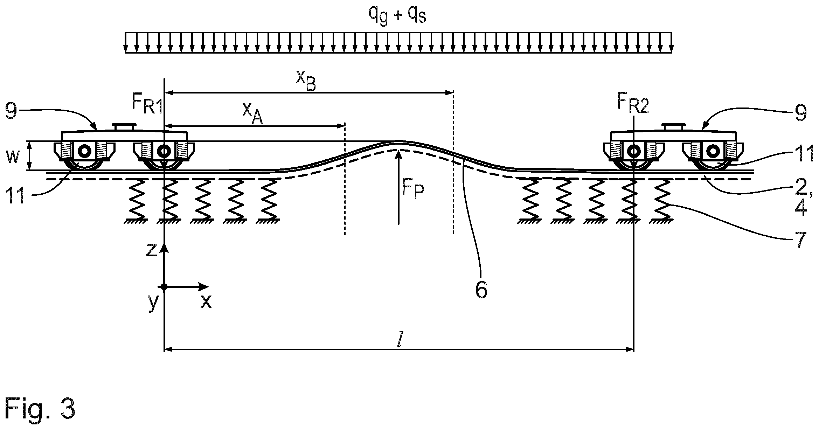

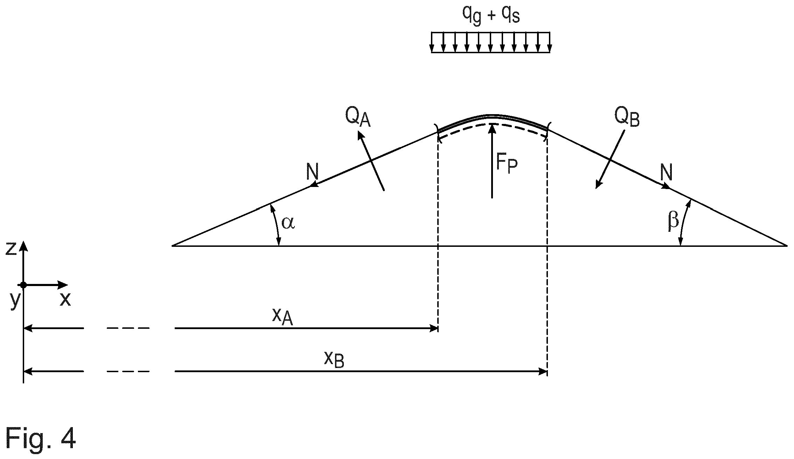

Anhand der Fig. 1 bis Fig. 4 ist ein Ausführungsbeispiel einer Vorrichtung 1 zum Bestimmen der Längskräfte in Gleisschienen 2 beschrieben. Die Vorrichtung 1 weist einen Fahrwagen 3 zum Befahren eines Gleises 4 und eine Prüfeinrichtung 5 zum Verlagern eines Schienenabschnitts 6 der mindestens einen Gleisschiene 2 und zum Erfassen mindestens eines Kraft-Messwerts auf.

Das Gleis 4 ist auf einer Gleisbettung 7, insbesondere einem Schotterbett, angeordnet. Zwei parallel und beabstandet zueinander angeordnete Gleisschienen 2 sind an Gleisschwellen 8 befestigt. Die Gleisschwellen 8 liegen auf der Gleisbettung 7 auf. Das Gleis 4 weist einen befahrbaren Montagezustand auf.

Der Fahrwagen 3 ist zum Befahren des Gleises 4 auf den Gleisschienen 2 angeordnet. Der Fahrwagen 3 umfasst zwei Drehgestelle 9 und einen daran angebrachten Tragrahmen 10. Die Drehgestelle 9 weisen schienenführbare Räder 11 auf. Mindestens ein Fahrmotor 12 des Fahrwagens 3 stellt die zum Verlagern entlang des Gleises 4 erforderliche Antriebskraft bereit.

Die Prüfeinrichtung 5 umfasst ein Hebe- und Richtaggregat 13. Das Hebe- und Richtaggregat 13 weist einen Greifer 14 zum reversiblen Greifen der Gleisschiene 2 auf. Je ein Hebeaktor 15 pro Gleisschiene 2 ist zum Verlagern des Schienenabschnitts 6 entlang einer Vertikalrichtung z vorgesehen. Ein nicht dargestellter Richtaktor ist zum Verlagern der mindestens einen Gleisschiene 2 in eine senkrecht zu einer Längsrichtung x des Gleises 4 orientierten Horizontalrichtung y ausgebildet. Der jeweilige Hebeaktor 15 und der jeweilige Richtaktor sind als fluidische, insbesondere hydraulische, Aktoren ausgebildet. Der Hebeaktor 15 und/oder der Richtaktor sind vorzugsweise zum Bewirken einer Prüfkraft F_{P}, insbesondere über den Greifer 14, auf die jeweilige Gleisschiene 2 ausgebildet.

Das Hebe- und Richtaggregat 13 weist ein Kraft-Messmittel 16 auf, das zum Erfassen eines Kraft-Messwerts ausgebildet ist, der mit der Prüfkraft F_{P} zum Verlagern des mindestens einen Schienenabschnitts 6 zwischen einer Ausgangsanordnung und einer Prüfanordnung korreliert. Das Kraft-Messmittel 16 ist vorzugsweise als Kraftmessdose ausgebildet. Das Hebe- und Richtaggregat 13 weist ferner ein Weg-Messmittel je Hebeaktor 15 und je Richtaktor zum Erfassen jeweils eines Weg-Messwerts w auf, welcher mit einer vertikalen und/oder horizontalen Auslenkung der mindestens einen Gleisschiene 2, insbesondere des Schienenabschnitts 6, insbesondere im Bereich des Greifers 14, zwischen der Ausgangsanordnung und der Prüfanordnung korreliert. Das jeweilige Weg-Messmittel 17 weist vorzugsweise mindestens einen Stellwegsensor, insbesondere ein Potentiometer, zum Erfassen eines Stellwegs des jeweiligen Hebeaktors 15 und/oder des jeweiligen Richtaktors auf.

Das Hebe- und Richtaggregat 13 ist an dem Tragrahmen 10 angebracht. Eine Versorgungseinrichtung 18 der Vorrichtung 1 stellt die zum Betreiben der Vorrichtung 1 erforderliche elektrische und fluidische Leistung bereit, insbesondere die zum Betreiben des jeweiligen Hebeaktors 15 und des Richtaktors erforderliche hydraulische Leistung.

Die Vorrichtung 1 weist ein Stopfaggregat 19 zum Verdichten der dem Gleis 4 zugrundeliegenden Gleisbettung 7 auf. Das Stopfaggregat 19 ist über eine vertikal orientierte Linearführung 20 an einem Aggregatträger 21 angebracht. Der Aggregatträger 21 ist an dem Tragrahmen 10 befestigt. Ein Vertikalantrieb 22 ist zum Verlagern des Stopfaggregats 19 entlang der Linearführung 20 ausgebildet.

Das Stopfaggregat 19 umfasst zwei Stopfpickel 23 und einen Stopfantrieb 24. Der Stopfantrieb 24 ist zum Schwenken der Stopfpickel 23 um horizontale Stopfpickelachsen 25 ausgebildet. Auf die Stopfpickel 23 wird mittels des Stopfantriebs 24 eine kombinierte Schwenk- und Vibrationsbewegung um die jeweilige Stopfpickelachse 25 übertragen. Der Stopfantrieb 24 umfasst elektrische und/oder fluidische, insbesondere hydraulische Aktoren. Der Stopfantrieb 24 steht mit der Versorgungseinrichtung 18 ist leistungsübertragender Verbindung. Mittels der Versorgungseinrichtung 18 wird das Stopfaggregat 19 mit der benötigten elektrischen und/oder fluidischen Leistung versorgt.

Die Vorrichtung 1 weist eine Steuereinrichtung 26 auf. Die Steuereinrichtung 26 steht in Signalverbindung mit dem Hebe- und Richtaggregat 13 und dem Stopfaggregat 19, insbesondere ferner dem Fahrwagen 3 und der Versorgungseinrichtung 18. Die Steuereinrichtung 26 ist dazu ausgebildet, das Anordnen des Gleises 4, insbesondere der mindestens einen Gleisschiene 2, mittels des Hebe- und Richtaggregats 13 zu steuern. Ferner ist die Steuereinrichtung 26 ist dazu ausgebildet, das Verdichten der Gleisbettung 7 mittels des Stopfaggregats 19 zu steuern. Insbesondere ist die Steuereinrichtung 26 zum Steuern der Versorgungseinrichtung 18 und/oder der Fahrbewegung des Fahrwagens 3 entlang des Gleises 4 ausgebildet.

Das Stopfaggregat 19 weist ein nicht dargestelltes Reaktionskraft-Messmittel zum Erfassen eines Reaktionskraft-Messwerts auf, welcher mit einer zwischen der Gleisbettung 7 und den Stopfpickeln 23 wirkenden Schotterkraft korreliert. Das Reaktionskraft-Messmittel kann beispielsweise als Drucksensor zum Erfassen des hydraulischen Drucks in einem hydraulischen Aktor des Stopfantriebs 24 ausgebildet sein. Vorzugsweise ist das Reaktionskraft-Messmittel dazu ausgebildet, einen Reaktionskraft-Messwert zu erfassen, welcher beim Eindringen des mindestens einen Stopfpickels 23 in die Gleisbettung 7, insbesondere in vertikaler Richtung, und/oder bei einer zyklischen Bewegung, insbesondere einer Vibrationsbewegung, des mindestens einen Stopfpickels 23 zwischen dem mindestens einen Stopfpickel 23 und der Gleisbettung 7 wirkt. Der Reaktionskraft-Messwert kann entsprechend mit der auf den mindestens Stopfpickel 23 wirkenden Eindringkraft und/oder einer beim Verdichten auf den mindestens einen Stopfpickel 23 wirkenden Vibrationskraft korrelieren.

Ferner umfasst die Vorrichtung 1 ein Temperatur-Messmittel 27 zum Bestimmen der Temperatur der mindestens einen Gleisschiene 2. Das Temperatur-Messmittel 27 ist als Pyrometer ausgebildet. Es steht mit der Steuereinrichtung 26 in Signalverbindung.

Eine Auswerteeinrichtung 28 der Vorrichtung 1 ist zum Bestimmen der Längskräfte in der mindestens einen Gleisschiene 2 anhand eines Signals des Kraft-Messmittels 16, insbesondere ferner anhand von Signalen des jeweiligen Weg-Messmittels 17, des Reaktionskraft-Messmittels und/oder des Temperatur-Messmittels 27, ausgebildet.

Die Funktionsweise der Vorrichtung 1 zum Bestimmen der Längskräfte in Gleisschienen 2 ist wie folgt:
In der Fig. 1 ist die Vorrichtung 1 in einer ersten Arbeitsstellung dargestellt. In der ersten Arbeitsstellung ist die Vorrichtung 1 auf dem Gleis 4 angeordnet. Die Stopfpickel 23 des Stopfaggregats 19 stehen außer Eingriff mit der Gleisbettung 7. Die beiden paarweise angeordneten Schienenabschnitte 6 überlappen entlang der Längsrichtung x das Hebe- und Richtaggregat 13, die beiden Greifer 14 und das Stopfaggregat 19. Das Hebe- und Richtaggregat 13 ist über die beiden Greifer 14 formschlüssig mit den Schienenabschnitten 6 verbunden. Das Hebe- und Richtaggregat 13 übt in der ersten Arbeitsstellung keine Kraft auf das Gleis 4, insbesondere die Schienenabschnitte 6 der Gleisschienen 2, aus. Die beiden Gleisschienen 2, insbesondere die Schienenabschnitte 6, befinden sich in der Ausgangsanordnung.

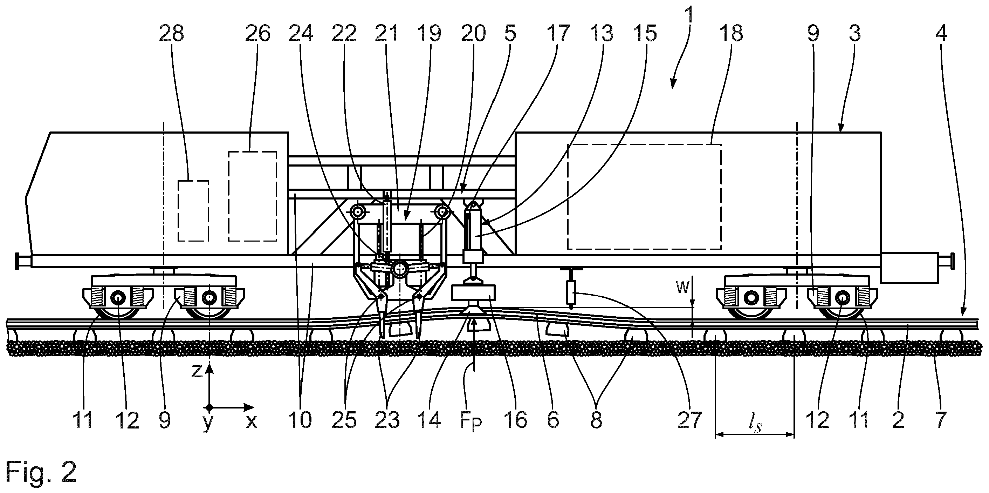

Zum Bestimmen der Längskräfte in den beiden Gleisschienen 2 stellt die Steuereinrichtung 26 ein Signal zum Aktivieren der beiden Hebeaktoren 15 an der Versorgungseinrichtung 18 bereit. Die Hebeaktoren 15 stellen die Prüfkraft F_{P} bereit und verlagern die beiden Greifer 14 mit den Schienenabschnitten 6 in Vertikalrichtung z nach oben. Die Vorrichtung 1 befindet sich in der in der Fig. 2 dargestellten zweiten Arbeitsstellung. Die beiden Gleisschienen 2, insbesondere die Schienenabschnitte 6, befinden sich in der Prüfanordnung.

Die Vertikalauslenkung w ist bestimmt durch den Abstand des jeweiligen Schienenabschnitts 6 zwischen der Ausgangsanordnung und der Prüfanordnung am Ort der Einleitung der Prüfkraft F_{P}, also an dem jeweiligen Greifer 14. Das jeweilige Weg-Messmittel 17 des Hebe- und Richtaggregats 13 erfasst den mit dem Stellweg des zugehörigen Hebeaktors 15 und entsprechend den mit der Vertikalauslenkung w korrelierenden Weg-Messwert. Mittels des Kraft-Messmittels 16 wird ein Kraft-Messwert erfasst, der mit der über den jeweiligen Greifer 14 auf die jeweilige Gleisschiene 2 wirkenden Prüfkraft F_{P} korreliert.

Die Gleisschienen 2 sind in der Prüfanordnung, insbesondere beim Erfassen des mindestens einen Kraft-Messwerts, an den Gleisschwellen 8 befestigt. In der Prüfanordnung befindet sich das Gleis 4, insbesondere im Bereich des mindestens einen Schienenabschnitts 6, in einem befahrbaren Montagezustand.

Das Temperatur-Messmittel 27 erfasst, insbesondere berührungslos, einen mit der Temperatur der jeweiligen Gleisschiene 2 korrelierenden Temperatur-Messwert.

Die Steuereinrichtung 26 stellt ein Signal zum Beginnen des Verdichtens der Gleisbettung 7 bereit. Das Stopfaggregat 19 wird mittels des Vertikalantriebs 22 abgesenkt. Die Stopfpickel 23 dringen in die Gleisbettung 7 ein. Die Stopfpickel 23 werden um die jeweilige Stopfpickelachse 25 geschwenkt und mit einer Vibrationsbewegung beaufschlagt. Der Schotter der Gleisbettung 7 wird im Bereich unterhalb des Stopfaggregats 19 verdichtet. Ein Reaktionskraft-Messwert wird beim Verdichten der Gleisbettung 7 mittels des Reaktionskraft-Messmittels erfasst. Der Verdichtungsvorgang wird beendet und das Stopfaggregat 19 wird wieder in die erste Arbeitsstellung verlagert.

Die Längskräfte, insbesondere eine Normalkraft N, in den Gleisschienen 2 werden anhand der erfassten Kraft-Messwerte, Weg-Messwerte, Temperatur-Messwerte und Reaktionskraft-Messwerte bestimmt. In der Auswerteeinrichtung 28 sind Informationen bezüglich der gewichtsbasierten Streckenlast aufgrund des Längengewichts q_{g} der Gleisschienen 2 hinterlegt. Ferner umfasst die Auswerteeinrichtung 28 Informationen über das resultierende Längengewicht qₛ der Gleisschwellen 8 entlang der Längsrichtung x. Dieses Längengewicht qₛ der Gleisschwellen 8 entspricht dem Quotienten aus dem mittleren Gewicht der einzelnen Gleisschwelle 8, insbesondere innerhalb des Schienenabschnitts 6, und dem mittleren Abstand lₛ zwischen den Mittellängsachsen zweier benachbarter Gleisschwellen 8. Ebenfalls in der Auswerteeinrichtung 28 hinterlegt sind Informationen bezüglich des Elastizitätsmoduls E, der Querschnittsfläche A und des Wärmeausdehnungskoeffizienten α_{T} der Gleisschienen 2 sowie des Flächenträgheitsmoments I der Gleisschienen 2, um die horizontale Querachse y und/oder um die Vertikalachse z. Die Längskräfte in der mindestens einen Gleisschiene 2 werden vorzugsweise bestimmt anhand des Flächenträgheitsmoments I der Gleisschiene 2 um die horizontale Querachse y bei einer Verlagerung des Schienenabschnitts 6 in Vertikalrichtung z und/oder anhand des Flächenträgheitsmoments I der Gleisschiene 2 um die Vertikalachse z beim Verlagern des Schienenabschnitts 6 in Horizontalrichtung y.

Ein Bettungsmodul k der Gleisbettung 7 ist in der Auswerteeinrichtung 28 hinterlegt. Der Bettungsmodul k entspricht der Steifigkeit der Gleisbettung 7 in Vertikalrichtung z. Der Bettungsmodul k wird anhand des Reaktionskraft-Messwerts bestimmt, insbesondere angepasst.

Anhand der vorstehend beschriebenen Informationen werden die Längskräfte, insbesondere die Normalkräfte N, die Normalspannung σ_{N} und/oder die Längsdehnung ε_{N}, in den Gleisschienen 2 berechnet. Die Berechnung erfolgt gemäß einem ersten Ausführungsbeispiel ausschließlich anhand eines in der Auswerteeinrichtung 28 hinterlegten FEM-Modells.

Ferner wird eine Neutraltemperatur T_{N} der jeweiligen Gleisschiene 2 bestimmt. Unter der Neutraltemperatur T_{N} wird jene Temperatur verstanden, bei welcher die Längskräfte, insbesondere Normalkräfte N, in den Gleisschienen 2 zu null werden. Hierzu wird die Prüftemperatur T_{P} der Gleisschienen 2 anhand des Temperatur-Messwerts bestimmt, der beim Erfassen des mindestens einen Kraft-Messwerts vorliegt. Die Neutraltemperatur T_{N} des jeweiligen Schienenabschnitts 6 wird hieraus wie folgt bestimmt: ${T}_{N} = {T}_{P} + \frac{N}{EA {α}_{T}}$

Zum Bestimmen der Prüftemperatur T_{P} wird der Temperatur-Messwert mittels des Temperatur-Messmittels 27 vorzugsweise mehrfach während der Überfahrt über den jeweiligen Schienenabschnitt 6 erfasst. Aus den mehreren Messwerten kann ein Mittelwert bestimmt werden, welcher eine besonders präzise Bestimmung der Prüftemperatur T_{P} ermöglicht. Durch die Mittelung können lokale Temperaturschwankungen und Messabweichungen ausgeglichen werden.

Gemäß einer alternativen Ausführungsform können die Längskräfte, insbesondere die Normalkraft N, die Normalspannung σ_{N} und die Längsdehnung ε_{N}, in der jeweiligen Gleisschiene 2 anhand analytischer Methoden bestimmt werden. Die jeweilige Gleisschiene 2 wird auf Grundlage der linearen Balkentheorie nach Bernoulli als elastisch gebetteter Balken modelliert. Die Gleisbettung 7 wird basierend auf dem vorbekannten Bettungsmodulverfahren nach Winkler modelliert. Das Randwertproblem für die Vertikalauslenkung w entlang der Längsrichtung x kann dabei wie folgt beschrieben werden: $EIw " " \left(x\right) + kγ \left(w\left(x\right)\right) w \left(x\right) = {q}_{g} + {q}_{s} .$

Die Auflagerpunkte der dem Hebe- und Richtaggregat 13 nächsten Räder 11 werden als Festlager bezüglich der Längsrichtung x angenommen, woraus folgt $w ′ \left(x=0\right) = w ′ \left(x=l\right) = 0 ,$ $- EIw ‴ \left(x=0\right) = {F}_{R 1} ,$ und $- EIw ‴ \left(x=l\right) = {F}_{R 2} .$

F_{R1} und F_{R2} sind die an den Rädern 11 auf die Gleisscheinen 2 wirkenden, vertikalen Querkräfte. γ ist eine Indikatorfunktion für den Bettungsausfall aufgrund der Prüfkraft F_{P}, die bestimmt wird gemäß $γ \left(w\left(x\right)\right) = \frac{1}{2} \left[tanh\left(λw\left(x\right)\right)+1\right] .$

Der Bettungsparameter λ beschreibt den Übergang zwischen dem auf der Gleisbettung 7 aufliegenden Bereich des Schienenabschnitts 6 und dem Bereich des Schienenabschnitts 6, der außer Kontakt mit der Gleisbettung 7 steht. Vorzugsweise wird der Bettungsparameter λ deutlich größer angenommen als der maximal auftretende Wert der Vertikalauslenkung w. Zum Bestimmen der Vertikalauslenkung w(x) kann die obige Differentialgleichung nummerisch gelöst werden. Hierauf basierend werden die Positionen x_{A} und x_{B} bestimmt, in denen die Querkräfte Q_{A} = Q (x = x_{A}), Q_{B} = Q (x = x_{B}) gleich null sind. In diesen Positionen werden die der Neigung der Gleisschienen 2 entsprechenden Gleisschienenwinkel α, β folgendermaßen bestimmt: $α \approx tan α = w ′ \left({x}_{A}\right) ,$ und $β \approx tan β = w ′ \left({x}_{B}\right) .$

Das Kräftegleichgewicht in vertikaler Richtung liefert die zu bestimmende Normalkraft N gemäß $N = \frac{{F}_{P} - \left({x}_{B}-{x}_{A}\right) ∗ \left({q}_{s}+{q}_{g}\right)}{sin α + sin β} .$

Alternativ können die Gleisschienenwinkel α, β näherungsweise als Quotient aus der Vertikalauslenkung w und einem empirisch ermittelten Längenwert bestimmt werden, welcher mit dem Abstand zwischen den Positionen x_{A}, x_{B} korreliert. Anhand der Normalkraft N kann die Normalspannung σ_{N} wie folgt bestimmt werden: ${σ}_{N} = \frac{N}{A} .$

Die Längsdehnung ε_{N} kann folgendermaßen berechnet gemäß ${ε}_{N} = \frac{N}{EA} .$

Vorzugsweise wird der mit der Prüfkraft F_{P} korrelierende mindestens eine Kraft-Messwert bei mindestens zwei unterschiedlichen Vertikalauslenkungen w erfasst. Insbesondere kann ein Verlauf des mindestens einen Kraft-Messwerts über der Vertikalauslenkung w bestimmt. Hierdurch können die Längskräfte in der jeweiligen Gleisschiene 2, insbesondere während des Verlagerns des Schienenabschnitts 6 zwischen der Ausgangsordnung und der Prüfanordnung mehrfach bestimmt werden. Durch Mittelwertbildung über diese mehreren Längskräfte kann eine Steigerung der Genauigkeit erzielt werden. Ferner kann hierdurch auf das Gewicht der jeweiligen Gleisschiene 2 und/oder der Gleisschwellen 8 rückgeschlossen werden. Die Längskräfte in den Gleisschienen 2 sind somit besonders zuverlässig und präzise bestimmbar.

Vorzugsweise wird ein Computerprogrammprodukt zum Ausführen des vorstehend beschriebenen Verfahrens bereitgestellt. Das Computerprogrammprodukt kann auf einer Speichereinheit, insbesondere der Auswerteeinrichtung 28, hinterlegt sein.

Dadurch, dass das Verfahren in einem befahrbaren Montagezustand des Gleises 4 ausführbar ist, kann das Bestimmen der Längskräfte in Gleisschienen 2 besonders zeiteffizient und wirtschaftlich erfolgen. Die mindestens eine an dem Schienenabschnitt 6 befestigte Gleisschwelle 8 wird, wie vorstehend beschrieben, insbesondere durch Berücksichtigung ihres Gewichts und der darauf einwirkenden Gleisbettung 7, bei der Bestimmung der Längskräfte einbezogen. Ein Lösen der Verbindung zwischen den Gleisschienen 2 und den Gleisschwellen 8 zum Bestimmen der Längskräfte kann vermieden werden. Eine zerstörungsfreie Prüfung des Gleises 4 wird ermöglicht. Das Verfahren ist insbesondere unabhängig von der Differenz zwischen der Neutraltemperatur T_{N} und der Prüftemperatur T_{P} ausführbar. Insbesondere kann die Prüftemperatur T_{P} zum Ausführen des Verfahrens größer sein als die Neutraltemperatur T_{N}, weil ein Verlagern der Gleisschienen 2 relativ zu den Gleisschwellen 8 nicht zu befürchten ist.

Dadurch, dass das Verfahren mittels der Vorrichtung 1, insbesondere mittels einer Gleisbaumaschine, ausgeführt wird, kann das Bestimmen der Längskräfte in besonders wirtschaftlicher Weise erfolgen. Eine entsprechende Vorrichtung 1 weist einen besonders breiten Einsatzbereich auf. Das Verdichten der Gleisbettung 7 und das Bestimmen der Längskräfte kann mittels der Vorrichtung 1 zeitlich zumindest teilweise parallelisiert und somit besonders zeiteffizient erfolgen.

## Patentansprüche

1. Verfahren zum Bestimmen der Längskräfte in Gleisschienen (2), aufweisend die Schritte:
1.1 Verlagern eines Schienenabschnitts (6) mindestens einer der Gleisschienen (2) aus einer Ausgangsanordnung in eine Prüfanordnung durch Bereitstellen einer Prüfkraft (F_{P}), wobei der Schienenabschnitt (6) entlang der Längsrichtung (x) des Gleises (4) den Ort überlappt, an dem die Prüfkraft (F_{P}) an der mindestens einen Gleisschiene (2) bereitgestellt wird,
1.2 Erfassen mindestens eines mit der Prüfkraft (F_{P}) korrelierenden Kraft-Messwerts in der Prüfanordnung, und
1.3 Bestimmen der Längskräfte in der mindestens einen Gleisschiene (2) anhand des mindestens einen Kraft-Messwerts,
**dadurch gekennzeichnet, dass**
1.4 beim Erfassen des mindestens einen Kraft-Messwerts mindestens eine an dem Schienenabschnitt (6) befestigte Gleisschwelle (8) durch Bereitstellen der Prüfkraft (F_{P}) zusammen mit dem Schienenabschnitt (6) aus der Ausgangsanordnung in die Prüfanordnung verlagert wird, wobei der Schienenabschnitt (6) entlang der Längsrichtung begrenzt ist durch diejenigen Abschnitte der mindestens einen Gleisschiene (2), welche in der Prüfanordnung keine Verlagerung gegenüber der Ausgangsanordnung erfahren.

2. Verfahren nach Anspruch 1, **dadurch gekennzeichnet, dass** der Schienenabschnitt (6) beim Erfassen des mindestens einen Kraft-Messwerts einen befahrbaren Montagezustand aufweist.

3. Verfahren nach Anspruch 1 oder 2, **gekennzeichnet durch** Bestimmen der Neutraltemperatur (T_{N}) der mindestens einen Gleisschiene (2) anhand der Längskräfte.

4. Verfahren nach einem der vorstehenden Ansprüche, **gekennzeichnet durch** Erfassen mindestens eines mit einer Auslenkung (w) der mindestens eine Gleisschiene (2) zwischen der Ausgangsordnung und der Prüfanordnung korrelierenden Weg-Messwerts.

5. Verfahren nach einem der vorstehenden Ansprüche, **dadurch gekennzeichnet, dass** das Verlagern mittels eines Hebe- und Richtaggregats (13) einer Gleisbaumaschine (1) erfolgt.

6. Verfahren nach einem der vorstehenden Ansprüche, **gekennzeichnet durch** Verdichten einer dem Schienenabschnitt (6) zugrundeliegenden Gleisbettung (7).

7. Verfahren nach einem der vorstehenden Ansprüche, **gekennzeichnet durch** Bestimmen der Längskräfte unter Berücksichtigung der Bettungssteifigkeit (k) einer dem Schienenabschnitt (6) zugrundeliegenden Gleisbettung (7).

8. Verfahren nach Anspruch 7, **gekennzeichnet durch** Bestimmen der Bettungssteifigkeit (k) anhand mindestens eines beim Verdichten der Gleisbettung (7) erfassten Verdichtungs-Messwerts und/oder anhand des mindestens einen mit der Prüfkraft (F_{P}) korrelierenden Kraft-Messwerts.

9. Verfahren nach einem der vorstehenden Ansprüche, **dadurch gekennzeichnet, dass** das Bestimmen der Längskräfte mittels analytischer Methoden erfolgt.

10. Verfahren nach einem der vorstehenden Ansprüche, **dadurch gekennzeichnet, dass** das Bestimmen der Längskräfte mittels der Finite Elemente Methode erfolgt.

11. Verfahren nach einem der vorstehenden Ansprüche, **gekennzeichnet durch** Bestimmen der Längskräfte anhand von mindestens zwei der Kraft-Messwerte, welche mit Prüfkräften (F_{P}) in jeweils unterschiedlichen Prüfanordnungen korrelieren.

12. Vorrichtung (1) zum Ausführen eines Verfahrens nach einem der vorstehenden Ansprüche, **gekennzeichnet durch** eine Prüfeinrichtung (5) mit mindestens einem Prüfaktor (15) zum Verlagern des Schienenabschnitts (6) mit der zumindest einen daran befestigten Gleisschwelle (8) aus der Ausgangsanordnung in die Prüfanordnung durch Bereitstellen der Prüfkraft (F_{P}) bei einer Begrenzung des Schienenabschnitts (6) entlang der Längsrichtung durch diejenigen Abschnitte der mindestens einen Gleisschiene (2), welche in der Prüfanordnung keine Verlagerung gegenüber der Ausgangsanordnung erfahren, und mindestens einem Kraft-Messmittel (16) zum Erfassen des mindestens einen Kraft-Messwerts und **durch** eine Auswerteeinrichtung (28) zum Bestimmen der Längskräfte in der mindestens einen im Schienenabschnitt (6) gemeinsam mit der zumindest einen Gleisschwelle (8) aus der Ausgangsanordnung in die Prüfanordnung verlagerten Gleisschiene (2) anhand eines Signals des Kraft-Messmittels (16).

13. Vorrichtung (1) nach Anspruch 12, **gekennzeichnet durch** einen Fahrwagen (3) zum Befahren eines Gleises (4), wobei die Prüfeinrichtung (5) an dem Fahrwagen (3) befestigt ist.

14. Vorrichtung (1) nach Anspruch 13, **dadurch gekennzeichnet, dass** diese derart ausgebildet ist, dass ein Schienenabschnitt (6) der den Fahrwagen (3) tragenden Gleisschiene (2) mittels der Prüfeinrichtung (5) verlagerbar ist.

15. Vorrichtung (1) nach einem der Ansprüche 12 bis 14, **gekennzeichnet durch** ein Stopfaggregat (19) zum Verdichten einer dem Schienenabschnitt (6) zugrundeliegenden Gleisbettung (7).

## Claims

1. A method for determining the longitudinal forces in track rails (2), comprising the steps:
1.1 Shifting a rail section (6) of at least one of the track rails (2) from an initial arrangement into a test arrangement by providing a test force (F_{P}), wherein the rail section (6) along the longitudinal direction (x) of the track (4) overlaps the location where the test force (F_{P}) is provided on the at least one track rail (2),
1.2 Recording at least one force measurement value correlating with the test force (F_{P}) in the test arrangement, and
1.3 Determining the longitudinal forces in the at least one track rail (2) using the at least one force measurement value,
**characterized in that**
1.4 at least one sleeper (8) attached to the rail section (6) when recording the at least one force measurement value, is shifted by providing the test force (F_{P}) together with the rail section (6) from the initial arrangement into the test arrangement, wherein the rail section (6) is limited along the longitudinal direction by those sections of the at least one track rail (2) that do not undergo any shifting in the test arrangement compared to the initial arrangement.

2. A method according to claim 1, **characterized in that** the rail section (6) is in a negotiable assembly state when the at least one force measurement value is recorded.

3. A method according to claim 1 or 2, **characterized by** determining the neutral temperature (T_{N}) of the at least one track rail (2) on the basis of the longitudinal forces.

4. A method according to one of the preceding claims, **characterized by** recording at least one distance measurement value correlating with a deflection (w) of the at least one track rail (2) between the initial arrangement and the test arrangement.

5. A method according to one of the preceding claims, **characterized in that** the shifting is carried out by means of a lifting and lining unit (13) of a track construction and maintenance machine (1).

6. A method according to one of the preceding claims, **characterized by** compacting a track bed (7) on which the rail section (6) is based.

7. A method according to one of the preceding claims, **characterized by** determining the longitudinal forces taking into account the bedding stiffness (k) of a track bed (7) on which the rail section (6) is based.

8. A method according to claim 7, **characterized by** determining the bedding stiffness (k) on the basis of at least one compaction measurement value recorded during compaction of the track bed (7) and/or on the basis of the at least one force measurement value correlating with the test force (F_{P}).

9. A method according to one of the preceding claims, **characterized in that** the longitudinal forces are determined by means of analytical methods.

10. A method according to one of the preceding claims, **characterized in that** the longitudinal forces are determined by means of the finite element method.

11. A method according to one of the preceding claims, **characterized by** determining the longitudinal forces on the basis of at least two of the force measurement values, which correlate with test forces (F_{P}) in respectively different test arrangements.

12. A device (1) for carrying out a method according to one of the preceding claims, **characterized by** a test device (5) with at least one test actuator (15) for shifting the rail section (6) with the at least one attached sleeper (8) from the initial arrangement into the test arrangement by providing the test force (F_{P}) by a limitation of the rail section (6) along the longitudinal direction by those sections of the at least one track rail (2) that do not undergo any shifting in the test arrangement compared to the initial arrangement and at least one force measuring means (16) for recording the at least one force measurement value and by an evaluation device (28) designed to determine the longitudinal forces in the at least one in the rail section (6) together with the at least one sleeper (8) from the initial arrangement into the test arrangement shifted track rail (2) on the basis of a signal from the force measuring means (16).

13. A device (1) according to claim 12, **characterized by** a running trailer (3) for travelling on a track (4), with the test device (5) being attached to the running trailer (3).

14. A device (1) according to claim 13, **characterized in that** it is designed in such a way that a rail section (6) of the track rail (2) carrying the running trailer (3) can be shifted by means of the test device (5).

15. A device (1) according to one of the claims 12 to 14, **characterized by** a tamping unit (19) for compacting a track bed (7) on which the rail section (6) is based.

## Revendications

1. Procédé de détermination des forces longitudinales dans des rails de voie (2), présentant les étapes :
1.1 déplacement d'une section de rail (6) d'au moins un des rails de voie (2) d'un agencement de départ dans un agencement de contrôle par mise à disposition d'une force de contrôle (F_{P}), dans lequel la section de rail (6) chevauche le long de la direction longitudinale (x) de la voie ferrée (4) l'emplacement où la force de contrôle (F_{P}) est mise à disposition sur l'au moins un rail de voie (2),
1.2 détection d'au moins une valeur de mesure de force en corrélation avec la force de contrôle (F_{P}) dans l'agencement de contrôle, et
1.3 détermination des forces longitudinales dans l'au moins un rail de voie (2) à l'aide de l'au moins une valeur de mesure de force,
**caractérisé en ce que**
1.4 lors de la détection de l'au moins une valeur de mesure de force, au moins une traverse de voie (8) fixée à la section de rail (6) est déplacée conjointement à la section de rail (6) de l'agencement de départ dans l'agencement de contrôle par mise à disposition de la force de contrôle (F_{P}), dans lequel la section de rail (6) est limitée le long de la direction longitudinale par les sections de l'au moins un rail de voie (2) qui ne subissent aucun déplacement par rapport à l'agencement de départ dans l'agencement de contrôle.

2. Procédé selon la revendication 1, **caractérisé en ce que** la section de rail (6) présente un état de montage pouvant être parcouru lors de la détection de l'au moins une valeur de mesure de force.

3. Procédé selon la revendication 1 ou 2, **caractérisé par** la détermination de la température neutre (T_{N}) de l'au moins un rail de voie (2) à l'aide des forces longitudinales.

4. Procédé selon une des revendications précédentes, **caractérisé par** la détection d'au moins une valeur de mesure de course en corrélation avec une déviation (w) de l'au moins un rail de voie (2) entre l'agencement de départ et l'agencement de contrôle.

5. Procédé selon une des revendications précédentes, **caractérisé en ce que** le déplacement s'effectue au moyen d'un module de levage et d'alignement (13) d'une machine de pose de voie (1).

6. Procédé selon une des revendications précédentes, **caractérisé par** le compactage d'un lit de voie (7) sous-jacent à la section de rail (6).

7. Procédé selon une des revendications précédentes, **caractérisé par** la détermination des forces longitudinales en tenant compte de la rigidité de lit (k) d'un lit de voie (7) sous-jacent à la section de rail (6).

8. Procédé selon la revendication 7, **caractérisé par** la détermination de la rigidité de lit (k) à l'aide d'au moins une valeur de mesure de compactage détectée lors du compactage du lit de voie (7) et/ou à l'aide de l'au moins une valeur de mesure de force en corrélation avec la force de contrôle (F_{P}).

9. Procédé selon une des revendications précédentes, **caractérisé en ce que** la détermination des forces longitudinales s'effectue au moyen de méthodes analytiques.

10. Procédé selon une des revendications précédentes, **caractérisé en ce que** la détermination des forces longitudinales s'effectue au moyen de la méthode des éléments finis.

11. Procédé selon une des revendications précédentes, **caractérisé par** la détermination des forces longitudinales à l'aide d'au moins deux des valeurs de mesure de force qui sont en corrélation avec des forces de contrôle (F_{P}) dans différents agencements de contrôle respectifs.

12. Dispositif (1) pour la réalisation d'un procédé selon une des revendications précédentes, **caractérisé par** une installation de contrôle (5) avec au moins un actionneur de contrôle (15) pour le déplacement de la section de rail (6) avec l'au moins une traverse de voie (8) fixée à elle de l'agencement de départ dans l'agencement de contrôle par mise à disposition de la force de contrôle (F_{P}) lors d'une limitation de la section de rail (6) le long de la direction longitudinale par les sections de l'au moins un rail de voie (2) qui ne subissent aucun déplacement par rapport à l'agencement de départ dans l'agencement de contrôle, et au moins un moyen de mesure de force (16) pour la détection de l'au moins une valeur de mesure de force et **par** une installation d'évaluation (28) pour la détermination des forces longitudinales dans l'au moins un rail de voie (2) déplacé dans la section de rail (6) conjointement à l'au moins une traverse de voie (8) de l'agencement de départ dans l'agencement de contrôle à l'aide d'un signal du moyen de mesure de force (16).

13. Dispositif (1) selon la revendication 12, **caractérisé par** un wagon (3) pour le parcours d'une voie ferrée (4), dans lequel l'installation de contrôle (5) est fixée au wagon (3).

14. Dispositif (1) selon la revendication 13, **caractérisé en ce que** celui-ci est réalisé de telle sorte qu'une section de rail (6) du rail de voie (2) portant le wagon (3) peut être déplacée au moyen de l'installation de contrôle (5).

15. Dispositif (1) selon une des revendications 12 à 14, **caractérisé par** un module de bourrage (19) pour le compactage d'un lit de voie (7) sous-jacent à la section de rail (6).
